# EUROPÄISCHE PATENTSCHRIFT

(11) **EP 2 448 794 B1**
(45) Veröffentlichungstag und Bekanntmachung des Hinweises auf die Patenterteilung: **13.03.2013**
(21) Anmeldenummer: 10723586.3
(22) Anmeldetag: 07.06.2010
(51) Int. Cl.: B60T 1/087

(54) **KRAFTFAHRZEUGGETRIEBE MIT HYDRODYNAMISCHEM RETARDER**
MOTOR VEHICLE GEARBOX WITH A HYDRODYNAMIC RETARDER
BOÎTE DE VITESSES À RALENTISSEUR HYDRODYNAMIQUE POUR VÉHICULE À MOTEUR

(30) Priorität: 01.07.2009 DE 102009027390
(43) Veröffentlichungstag der Anmeldung: 09.05.2012
(73) Patentinhaber: ZF Friedrichshafen AG, 88038 Friedrichshafen (DE)
(72) Erfinder: GRUPP, Bernhard, 88250 Weingarten (DE); BURI, Gerhard, 88677 Markdorf (DE)
(86) Internationale Anmeldenummer: PCT/EP2010/057881
(87) Internationale Veröffentlichungsnummer: WO 2011/000664

(56) Entgegenhaltungen:
- EP-A2- 1 916 448
- DE-A1- 4 306 743
- DE-A1- 10 156 186

## Beschreibung

Die Erfindung betrifft ein Getriebe eines Kraftfahrzeuges mit hydrodynamischem Retarder nach dem Oberbegriff des Patentanspruches 1 sowie ein Verfahren zum Betreiben des Getriebes nach dem Oberbegriff des Patentanspruches 11.

Kraftfahrzeuge mit Retarder als hydrodynamischer Bremse sind bekannt, wobei man Primär- und Sekundärretarder unterscheidet: Primärretarder befinden sich motorseitig und Sekundärretarder getriebeseitig im Triebstrang. Sekundärretarder werden an das Getriebe angeflanscht oder in das Getriebegehäuse integriert und von der Getriebeabtriebswelle über eine Hochtriebstufe angetrieben. Bekannt ist es auch, Getriebe mit einem Anschluss für einen Nebenabtrieb auszustatten, wobei dieser Anschluss kupplungsabhängig betreibbar ist, d. h. wenn die Brennkraftmaschine des Kraftfahrzeuges läuft und die Kupplung zwischen Brennkraftmaschine und Getriebe geschlossen ist - in diesem Falle kann der Anschluss für den Nebenabtrieb in Betrieb genommen werden.

Durch die DE 101 56 186 A1, siehe Oberbegriff des Anspruchs 1, der Anmelderin wurde ein Kraftfahrzeuggetriebe mit einem hydrodynamischen Retarder bekannt, welcher über einen Winkeltrieb an die Abtriebswelle des Getriebes angeschlossen ist. Das bekannte Getriebe weist eine Antriebswelle, eine Hauptwelle und zwei Vorgelegewellen auf, wobei in der Zeichnung in Verlängerung der oberen Vorgelegewelle eine weitere Welle dargestellt ist, die als Antriebswelle für einen Nebenabtrieb angesehen werden kann.

Durch die DE 41 08 658 A1 der Anmelderin wurde ein Kraftfahrzeuggetriebe mit einem hydrodynamischen Retarder bekannt, welcher von der Abtriebswelle des Getriebes über eine Stirnradstufe, einer so genannten Hochtreiberstufe, angetrieben wird.

Es ist Aufgabe der vorliegenden Erfindung, bei einem Getriebe der eingangs genannten Art mindestens einen weiteren Anschluss für einen Nebenabtrieb zu schaffen, der möglichst vielfältig verwendbar sein soll. Es ist auch Aufgabe der Erfindung, ein Verfahren zum Betreiben des Getriebes, insbesondere für unterschiedliche Verwendungen der Nebenabtriebe bereitzustellen.

Die Aufgabe der Erfindung wird durch die Merkmale der unabhängigen Patentansprüche 1 und 11 gelöst. Vorteilhafte Ausgestaltungen ergeben sich aus den Unteransprüchen.

Erfindungsgemäß ist vorgesehen, dass von dem Antriebszahnrad, dem so genannten Hochtreiberrad der Hochtreiberstufe, mindestens ein weiterer Nebenabtrieb antreibbar ist. Dies erfolgt über ein weiteres Ritzel, welches - zusätzlich zu dem Ritzel für den Antrieb des Retarders - mit dem Hochtreiberrad in Zahnreingriff steht. Damit wird der Vorteil erreicht, dass das Getriebe über einen Anschluss für einen weiteren Nebenabtrieb verfügt, welcher auf geringstem Bauraum untergebracht ist.

Nach einer bevorzugten Ausführungsform ist das weitere Abtriebszahnrad bzw. das zweite Ritzel auf einer eine Nebenabtriebswelle antreibenden Ritzelwelle angeordnet.

Nach einer weiteren bevorzugten Ausführungsform ist zwischen der Nebenabtriebswelle für den weiteren Nebenabtrieb und der Ritzelwelle eine Schaltkupplung angeordnet, durch welche die Nebenabtriebswelle mit der Ritzelwelle kuppelbar ist, d. h. der weitere Nebenabtrieb kann über die erste Schaltkupplung zu- oder abgeschaltet werden. Bei Zuschaltung des weiteren Nebenabtriebes erfolgt der Betrieb fahrabhängig, d. h. wenn das Fahrzeug fährt.

Nach einer weiteren bevorzugten Ausführungsform ist der weitere Nebenabtrieb über eine Stirnradstufe mit einem zusätzlichen Nebenabtrieb verbunden. Damit ergibt sich ein Anschluss für einen zusätzlichen Nebenabtrieb, wobei die Übersetzung vorzugsweise ins Schnelle erfolgt.

Nach einer weiteren bevorzugten Ausführungsform ist die Nebenabtriebswelle über eine weitere Stirnradstufe und eine zweite Schaltkupplung mit dem Nebenabtrieb kuppelbar. Alternativ kann die weitere Stirnradstufe ein Zwischenrad umfassen, wodurch die Drehrichtung umkehrbar ist, sodass der weitere und der Nebenabtrieb in derselben Drehrichtung umlaufen.

Nach einer weiteren bevorzugten Ausführungsform ist der Nebenabtrieb über eine Getriebewelle, vorzugsweise eine Vorgelegewelle antreibbar, wobei sich im Nebenabtriebsstrang eine dritte Schaltkupplung befindet. Dadurch kann der Nebenabtrieb einerseits zugeschaltet und damit kupplungsabhängig betrieben werden oder von der Getriebewelle abgekoppelt und fahrabhängig über den weiteren Nebenabtrieb betrieben werden.

Nach einer weiteren bevorzugten Ausführungsform ist eine mechanische, elektrische oder elektronische Kontrolleinheit vorgesehen, welche den Schaltzustand der ersten, zweiten und dritten Schaltkupplung überwacht. Damit können unterschiedliche Betriebs- und Schaltzustände der drei Nebenabtriebe eingeleitet und kontrolliert werden.

Erfindungsgemäß ist bei einem Verfahren zum Betreiben des Getriebes vorgesehen, dass die Nebenabtriebe kupplungsabhängig oder fahrabhängig oder kupplungs- und fahrabhängig betreibbar sind. Durch Betätigung der Schaltkupplungen über die elektronische Kontrolleinheit können die Nebenabtriebe so geschaltet werden, dass sie einerseits bei stehendem Fahrzeug und laufendem Motor und andererseits bei fahrendem Fahrzeug oder bei stehendem und fahrendem Fahrzeug betrieben werden können.

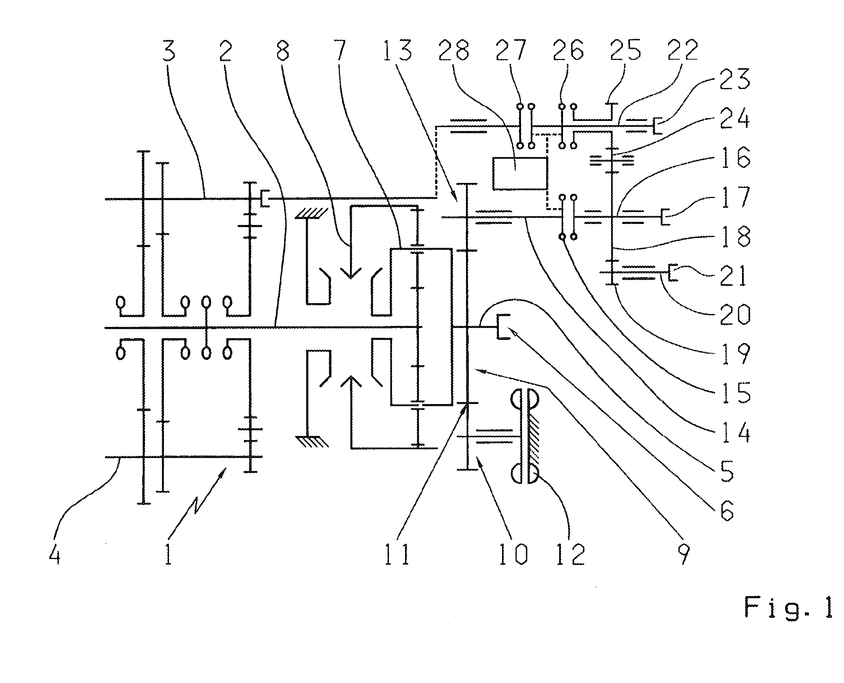

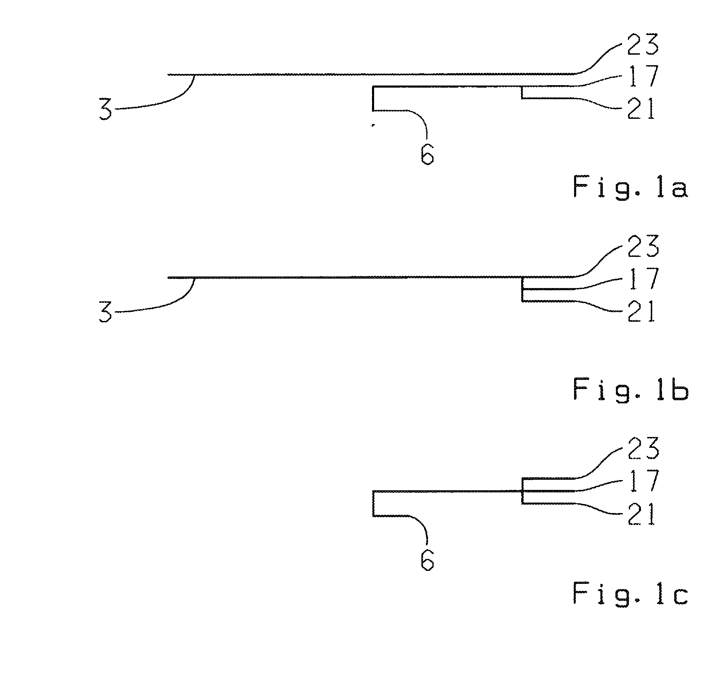

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: ein Getriebe mit Anschlüssen für Nebenabtriebe und
- Fig. 1 a, 1 b, 1 c: ein Schema für den Kraftfluss beim Betrieb der Nebenabtriebe.

Fig. 1 zeigt den abtriebsseitigen Teil eines Getriebe 1, welches eine Hauptwelle 2, zwei Vorgelegewellen 3, 4 sowie eine Abtriebswelle 5 mit Abtriebsflansch 6 aufweist. Das nicht vollständig dargestellte Getriebe 1 entspricht im Wesentlichen dem Getriebe der eingangs genannten Druckschrift DE 101 56 186 A1. Die Hauptwelle 2 ist mit der Abtriebswelle 5 über einen Planetenradsatz 7 verbunden, welcher durch eine Schalteinrichtung 8 in unterschiedliche Übersetzungsstufen schaltbar ist. Auf der Abtriebswelle 5 ist ein Antriebszahnrad 9 drehfest angeordnet, welches mit einem Abtriebszahnrad 10 in Eingriff steht und eine Stirnradstufe 11 zum Antrieb eines Retarders 12 bildet. Das Antriebszahnrad 9 wird auch als Hochtreiberrad 9 und die Stirnradstufe 11 auch als Hochtreiberstufe 11 oder Hochtrieb 11 bezeichnet, da der Antrieb des Retarders 12 ins Schnelle erfolgt.

Erfindungsgemäß steht das Hochtreiberrad 9 mit einem weiteren Abtriebszahnrad 13 in Eingriff, welches auch als Nebenabtriebsritzel 13 bezeichnet wird. Das Nebenabtriebsritzel 13 treibt eine Ritzelwelle 14 an, welche über eine erste Schaltkupplung 15 mit einer Nebenabtriebswelle 16 verbunden oder von dieser getrennt werden kann. Die Nebenabtriebswelle 16 weist einen Anschluss 17 auf, der mit einem nicht dargestellten weiteren Nebenabtrieb verbunden werden kann. Die Nebenabtriebswelle 16 treibt über eine Stirnradstufe 18/19 eine zusätzliche Nebenabtriebswelle 20 mit einem Anschluss 21 für einen nicht dargestellten zusätzlichen Nebenabtrieb an. Die Nebenabtriebswelle 16 steht mit einer Nebenabtriebswelle 22 in Verbindung, welche einen Anschluss 23 für einen nicht dargestellten Nebenabtrieb aufweist. Die Nebenabtriebswelle 22 wird über die Zahnräder 18, 24, 25 angetrieben und ist über eine zweite Schaltkupplung 26 zuschaltbar. Das Zahnrad 24 ist als Zwischenrad ausgebildet, sodass die Anschlüsse 17, 23 für die Nebenabtriebe die gleiche Drehrichtung aufweisen. Die Nebenabtriebswelle 22 kann über eine dritte Schaltkupplung 27 mit der Vorgelegewelle 3, auch Getriebewelle 3 genannt, des Getriebes 1 verbunden werden. Dadurch ergibt sich eine zusätzliche Antriebsmöglichkeit für den Anschluss 23, welcher bei geschlossener dritter Schaltkupplung 27 und geöffneter zweiter Schaltkupplung 26 kupplungsabhängig betreibbar ist. Der Schaltzustand der ersten, zweiten, dritten Schaltkupplung, 15, 26, 27 wird durch eine Kontrolleinheit 28 überwacht, was durch punktierte Signalleitungen angedeutet ist.

Die drei Nebenabtriebe 17, 21, 23 sind wie folgt betreibbar: Die Nebenabtriebe 17, 21 können einerseits fahrabhängig betrieben werden, dann ist die Schaltkupplung 15 geschlossen und die Schaltkupplung 26 offen. Andererseits können die Nebenabtriebe 17, 20 kupplungsabhängig betrieben werden, dann ist die Schaltkupplung 15 offen, und die Schaltkupplungen 26, 27 sind geschlossen.

Ferner kann der Nebenabtrieb 23 durch Schließen der Schaltkupplung 27 kupplungsabhängig und durch Öffnen der Schaltkupplung 27 und Schließen der Schaltkupplungen 26, 15 fahrabhängig betrieben werden.

Fig. 1a, 1b, 1c zeigen drei verschiedene Möglichkeiten des Kraftflusses beim Betrieb der drei Nebenabtriebe bzw. Anschlüsse 23, 17, 21, die jeweils von oben nach unten durchnummeriert sind. Fig. 1 a zeigt eine obere durchgehende Linie zum Nebenabtrieb 23, d. h. bei geschlossener Schaltkupplung 27 und offener Schaltkupplung 26 erfolgt ein Durchtrieb von der Vorgelegewelle 3 auf den Anschluss 23. Gleichzeitig ist die Schaltkupplung 15 geschlossen, sodass die Nebenabtriebe 17, 21 fahrabhängig betrieben werden.

Fig. 1b zeigt den Kraftfluss bei geschlossenen Schaltkupplungen 27, 26 und geöffneter Schaltkupplung 15, d. h. alle drei Nebenabtriebe 23, 17, 21 werden kupplungsabhängig betrieben.

Fig. 1c zeigt den Kraftfluss bei geöffneter Schaltkupplung 27 und geschlossener Schaltkupplung 15, d. h. der Antrieb der drei Nebenabtriebe 23, 17, 21 erfolgt fahrabhängig.

### Bezugszeichen

- 1: Getriebe
- 2: Hauptwelle
- 3: Vorgelegewelle
- 4: Vorgelegewelle
- 5: Abtriebswelle
- 6: Abtriebsflansch
- 7: Planetenradsatz
- 8: Schalteinrichtung
- 9: Antriebszahnrad (Hochtreiberrad)
- 10: Abtriebszahnrad
- 11: Stirnradstufe (Hochtreiberstufe)
- 12: Retarder
- 13: weiteres Abtriebszahnrad (Nebenabtriebsritzel)
- 14: Ritzelwelle
- 15: erste Schaltkupplung
- 16: Nebenabtriebswelle
- 17: Anschluss für weiteren Nebenabtrieb
- 18: Zahnrad
- 19: Zahnrad
- 20: Nebenabtriebswelle
- 21: Anschluss für zusätzlichen Nebenabtrieb
- 22: Nebenabtriebswelle
- 23: Anschluss für Nebenabtrieb
- 24: Zwischenrad
- 25: Zahnrad
- 26: zweite Schaltkupplung
- 27: dritte Schaltkupplung
- 28: Kontrolleinheit

## Patentansprüche

1. Getriebe eines Kraftfahrzeuges mit hydrodynamischem Retarder (12) und mindestens einem Anschluss (23) für einen Nebenabtrieb, wobei der Retarder (12) von einer Abtriebswelle (5) des Getriebes (1) über eine ein Antriebszahnrad (9) und ein Abtriebszahnrad (10) aufweisende Stirnradstufe (11) antreibbar ist, **dadurch gekennzeichnet, dass** das Antriebszahnrad (9) mit mindestens einem weiteren Abtriebszahnrad (13) in Eingriff steht, durch welches mindestens ein weiterer Nebenabtrieb (17, 21) antreibbar ist.

2. Getriebe nach Anspruch 1, **dadurch gekennzeichnet, dass** das weitere Abtriebszahnrad (13) auf einer Ritzelwelle (14) angeordnet ist.

3. Getriebe nach Anspruch 2, **dadurch gekennzeichnet, dass** die Ritzelwelle (14) mit einer Nebenabtriebswelle (16) kuppelbar ist, die abtriebsseitig einen Anschluss (17) für den weiteren Nebenabtrieb aufweist.

4. Getriebe nach Anspruch 2 oder 3, **dadurch gekennzeichnet, dass** die Nebenabtriebswelle (16) mittels einer ersten Schaltkupplung (15) trennbar oder zuschaltbar ist.

5. Getriebe nach Anspruch 2, 3 oder 4, **dadurch gekennzeichnet, dass** die Nebenabtriebswelle (16) über eine Stirnradstufe (18, 19) mit einer zusätzlichen Nebenabtriebswelle (20) verbunden ist.

6. Getriebe nach einem der Ansprüche 2 bis 5, **dadurch gekennzeichnet, dass** die Nebenabtriebswelle (16) über eine Stirnradstufe (18, 24, 25) und eine zweite Schaltkupplung (26) mit dem Nebenabtrieb (23) kuppelbar ist.

7. Getriebe nach Anspruch 6, **dadurch gekennzeichnet, dass** die Stirnradstufe (18, 25) ein Zwischenrad (24) umfasst.

8. Getriebe nach einem der Ansprüche 1 bis 7, **dadurch gekennzeichnet, dass** der Nebenabtrieb (23) von einer Getriebewelle oder Vorgelegewelle (3) des Getriebes (1) antreibbar ist.

9. Getriebe nach Anspruch 8, **dadurch gekennzeichnet, dass** der Nebenabtrieb (23) über eine dritte Schaltkupplung (27) zuschaltbar ist.

10. Getriebe nach einem der Ansprüche 1 bis 9, **dadurch gekennzeichnet, dass** eine mechanische, elektrische oder elektronische Kontrolleinheit (28) für die Überwachung der Schaltzustände der Schaltkupplungen (15, 26, 27) vorgesehen ist.

11. Verfahren zum Betreiben eines Getriebes (1) mit Nebenabtrieben (17, 21, 23) nach einem der vorhergehenden Ansprüche, **dadurch gekennzeichnet, dass** sämtliche Nebenabtriebe (17, 21, 23) kupplungsabhängig oder fahrabhängig oder kupplungs- und fahrabhängig betrieben sind.

## Claims

1. Motor vehicle gearbox with a hydrodynamic retarder (12) and at least one connection (23) for a power takeoff, wherein the retarder (12) can be driven by an output shaft (5) of the gearbox (1) via a spur gear stage (11) having a drive gear wheel (9) and an output gear wheel (10), **characterized in that** the drive gear wheel (9) is in engagement with at least one further output gear wheel (13) by which at least one further power takeoff (17, 21) can be driven.

2. Gearbox according to Claim 1, **characterized in that** the further output gear wheel (13) is arranged on a pinion shaft (14).

3. Gearbox according to Claim 2, **characterized in that** the pinion shaft (14) can be coupled to a power takeoff shaft (16) which has, on the output side, a connection (17) for the further power takeoff.

4. Gearbox according to Claim 2 or 3, **characterized in that** the power takeoff shaft (16) can be separated or connected by means of a first shift clutch (15).

5. Gearbox according to Claim 2, 3 or 4, **characterized in that** the power takeoff shaft (16) is connected via a gear wheel stage (18, 19) to an additional power takeoff shaft (20).

6. Gearbox according to one of Claims 2 to 5, **characterized in that** the power takeoff shaft (16) can be coupled via a gear wheel stage (18, 24, 25) and a second shift clutch (26) to the power takeoff (23).

7. Gearbox according to Claim 6, **characterized in that** the gear wheel stage (18, 25) comprises an intermediate wheel (24).

8. Gearbox according to one of Claims 1 to 7, **characterized in that** the power takeoff (23) can be driven by a gearbox shaft or countershaft (3) of the gearbox (1).

9. Gearbox according to Claim 8, **characterized in that** the power takeoff (23) can be connected via a third shift clutch (27).

10. Gearbox according to one of Claims 1 to 9, **characterized in that** a mechanical, electrical or electronic control unit (28) is provided for monitoring of the shifting states of the shift clutches (15, 26, 27).

11. Method for operating a gearbox (1) with power takeoffs (17, 21, 23) according to one of the preceding claims, **characterized in that** all the power takeoffs (17, 21, 23) are operated in a clutch-dependent or driving-dependent or clutch-and driving-dependent manner.

## Revendications

1. Boîte de vitesses pour un véhicule à moteur, comprenant un ralentisseur hydrodynamique (12) et au moins un accouplement (23) pour une prise de force, le ralentisseur (12) pouvant être entraîné par un arbre de sortie (5) de la boîte de vitesses (1) au moyen d'un étage à pignon droit (11) comprenant une roue dentée d'entraînement (9) et une roue dentée de sortie (10), **caractérisée en ce que** la roue dentée d'entraînement (9) s'engrène avec au moins une autre roue dentée de sortie (13) au moyen de laquelle au moins une prise de force supplémentaire (17, 21) peut être entraînée.

2. Boîte de vitesses selon la revendication 1, **caractérisée en ce que** la roue dentée de sortie supplémentaire (13) est disposée sur un arbre de pignon (14).

3. Boîte de vitesses selon la revendication 2, **caractérisée en ce que** l'arbre de pignon (14) peut être accouplé à un arbre de prise de force (16) qui comprend un accouplement (17) pour la prise de force supplémentaire du côté de la sortie.

4. Boîte de vitesses selon la revendication 2 ou 3, **caractérisée en ce que** l'arbre de prise de force (16) peut être séparé ou peut être commuté au moyen d'un premier embrayage de changement de vitesses (15).

5. Boîte de vitesses selon la revendication 2, 3 ou 4, **caractérisée en ce que** l'arbre de prise de force (16) est relié à un arbre de prise de force supplémentaire (20) au moyen d'un étage à pignon droit (18, 19).

6. Boîte de vitesses selon l'une quelconque des revendications 2 à 5, **caractérisée en ce que** l'arbre de prise de force (16) peut être accouplé à la prise de force (23) au moyen d'un étage à pignon droit (18, 24, 25) et d'un deuxième embrayage de changement de vitesses (26).

7. Boîte de vitesses selon la revendication 6, **caractérisée en ce que** l'étage à pignon droit (18, 25) comporte une roue intermédiaire (24).

8. Boîte de vitesses selon l'une quelconque des revendications 1 à 7, **caractérisée en ce que** la prise de force (23) peut être entraînée par un arbre de boîte de vitesses ou un arbre intermédiaire (3) de la boîte de vitesses (1).

9. Boîte de vitesses selon la revendication 8, **caractérisée en ce que** la prise de force (23) peut être commutée au moyen d'un troisième embrayage de changement de vitesses (27).

10. Boîte de vitesses selon l'une quelconque des revendications 1 à 9, **caractérisée en ce qu'**une unité de contrôle (28) mécanique, électrique ou électronique est prévue pour la surveillance des états de commutation des embrayages de changement de vitesses (15, 26, 27).

11. Procédé de fonctionnement d'une boîte de vitesses (1) comprenant des prises de force (17, 21, 23) selon l'une quelconque des revendications précédentes, **caractérisé en ce que** toutes les prises de force (17, 21, 23) fonctionnent de manière dépendante de l'embrayage ou de manière dépendante de la marche ou de manière dépendante de l'embrayage et de la marche.
